# EUROPEAN PATENT APPLICATION

(11) **EP 4 503 401 A1**
(43) Date of publication of application: **05.02.2025**
(21) Application number: 23188841.3
(22) Date of filing: 01.08.2023
(51) Int. Cl.: H02K 11/20, H02K 13/00

(54) **ELECTRIC MACHINE**

(71) Applicant: MAHLE International GmbH, 70376 Stuttgart (DE)
(72) Inventor: CUFER, Urban, 5213 Kanal (SI); PAHOR KOS, Vanja, 1370 Logatec (SI); PAVSIC, Marko, 5212 Dobrovo (SI)
(74) Representative: BRP Renaud & Partner mbB Rechtsanwälte Patentanwälte Steuerberater

(57) **Abstract**

The invention relates to an electric machine (1) with a rotor assembly (2) with a shaft (4) and a rotor (3) and with a stator (5). The machine (1) further contains a brush unit (10) with a brush holder (12) and a slip ring unit (11) with a slip ring holder (14). The machine (1) further contains a sensor unit (9) with a distance sensor (16) for detecting a distance between the brush holder (12) and the slip ring holder (14).

## Description

The invention relates to an electric machine, in particular an electric motor or an electric generator or an alternator, according to preamble of claim 1.

An electric machine usually contains a rotatable rotor assembly and a stationary stator. The rotor assembly is formed by a shaft and a rotor that is non-rotatably mounted on the shaft. The rotor assembly and the stator are arranged in a housing of the electric machine. Thereby, the stator is non-rotatably mounted on the housing and the rotor assembly is rotatably arranged in the stator via two bearings. Expediently, a radial air gap is formed between the rotor and the stator. During operation, the electric machine is exposed to various environmental influences and/or impacts. The influences and/or impacts can cause the degradation of the bearings and/or the bearing seats of the bearings, and a change of the geometry of the air gap between the rotor and the stator can occur. The change or deformation of the air gap can thereby lead to high magnetic noise and lower output. In the worst case, contact between the stator and the rotor and a friction-induced wear of the stator and/or the rotor and ultimately a short circuit during further operation of the electric machine can occur.

It is therefore the object of the invention to provide an improved or at least alternative embodiment for an electric machine of the type described, in which the described disadvantages are overcome.

This object is solved according to the invention by the object of independent claim 1. Advantageous embodiments are the subject of the dependent claims.

The present invention is based on the general idea to detect an inclination of the rotor in the stator and thereby to detect a deformation and/or a change in the air gap between the rotor and the stator, in order to avoid at an early stage a misalignment of the rotor and a short circuit of the electric machine.

The electric machine according to the invention can in particular be an electric motor or an electric generator or an alternator. The electric machine contains a rotor assembly with a shaft which is rotatable about an axis of rotation and a rotor which is non-rotatably mounted i.e. non-rotatably fixed i.e. non-rotatably fastened i.e. non-rotatably secured on the shaft, and a stator. The rotor assembly is rotatably arranged in the stator and the rotor is arranged radially spaced to the stator. The machine also contains a contact device for electrically contacting the rotor to the outside. The contact device contains a stationary brush unit and a slip ring unit which is non-rotatably mounted i.e. non-rotatably fixed i.e. non-rotatably fastened i.e. non-rotatably secured on the shaft. The brush unit contains at least two - preferably exactly two - electrically conductive brushes and a brush holder supporting i.e. carrying the brushes, and the slip ring unit contains at least two - preferably exactly two - electrically conductive slip rings which are in electrical contact with the brushes and a slip ring holder supporting i.e. carrying the slip rings. The electric machine further contains a sensor unit with a distance sensor. According to the invention, the distance sensor of the sensor unit is arranged on the brush holder of the brush unit radially opposite and radially spaced to the slip ring holder of the slip ring unit, so that a radial distance between the brush holder and the slip ring holder can be detected via the distance sensor.

In the context of the present invention, the terms "radial" and "axial" and "circumferential" are always referred to the axis of rotation of the shaft. The term "axial" is used synonymously with the term "in an axial direction" and the term "radial" is used synonymously with the term "in a radial direction" and the term "circumferential" is used synonymously with the term "in a direction circumferential to the axis of rotation".

In the electric machine, the shaft and the rotor and stator are aligned coaxially with each other and coaxially with the axis of rotation of the shaft. The rotor and the stator are radially spaced apart to each other. In other words, a radial air gap is formed between the stator and the rotor. A radial width of the air gap can be between 0.1 mm and 0.5 mm, preferably between 0.2 mm and 0.4 mm. The brush holder and the slip ring holder can be radially spaced apart from each other. In this case, the distance between the brush holder and the slip ring holder correlates to the distance between the rotor and the stator or to the radial width of the air gap formed between the rotor and the stator. In particular, the distance between the brush holder and the slip ring holder can change or deform in the same way when the air gap between the rotor and the stator changes or deforms. Accordingly, a change or a deformation of the air gap between the rotor and the stator can also be detected or measured at the distance between the brush holder and the slip ring holder. Thus, an undesired change or an undesired deformation of the air gap between the rotor and the stator can be detected via the sensor unit at an early stage and damage to the electric machine can be prevented.

The electric machine can contain a housing. The stator and the rotor assembly can be accommodated i.e. arranged in the housing. The rotor assembly i.e. the shaft of the rotor assembly can be rotatably mounted in the housing. For this purpose, the electric machine can contain two bearings that rotatably support the shaft on its longitudinal ends in the housing. The two bearings can be arranged on the shaft on both sides with respect to the rotor. In other words, the rotor can be arranged axially between the bearings. The bearing adjacent to the contact device can be arranged on the shaft between the rotor and the contact device.

The shaft and the rotor and the stator and the housing - at least in parts - can be aligned coaxially with each other and with the axis of rotation of the shaft. This can be achieved by multiple tolerances and multiple centricities in the interfaces between the rotor and/or the bearings and/or the housing and/or the shaft and/or the stator. The change or deformation of the air gap between the rotor and the stator can occur in particular due to wear of the respective bearing and/or the respective bearing seat of the respective bearing. As already described above, the said change and/or the said deformation of the air gap between the rotor and the stator can be seen in the distance between the brush holder and/or the distance sensor and the slip ring holder.

To detect the distance between the brush holder and the slip ring holder, the sensor unit contains the distance sensor. The distance sensor is arranged radially opposite and radially spaced to the slip ring holder of the slip ring unit. The distance sensor can have a radial distance equal to 0.1-1.5 mm, preferably equal to 0.5-1.0 mm, to the slip ring holder. The distance sensor of the sensor unit is arranged on the brush holder and can detect the distance to the slip ring holder and thereby the distance between the brush holder and the slip ring holder. The distance sensor can be any sensor for contactless determination of a distance to a surface. The distance sensor can be a sensor known to the skilled person for contactless determination of a distance to a surface.

The brush unit can, for example, be non-rotatably mounted i.e. non-rotatably fixed i.e. non-rotatably fastened i.e. non-rotatably secured to the stator and/or to a housing of the machine. The housing can be of the art described above. The brushes can be non-rotatably mounted i.e. non-rotatably fixed i.e. non-rotatably fastened i.e. non-rotatably secured in the brush holder. The brushes can be force-fittedly and/or form-fittedly mounted in the brush holder. The brushes can be arranged axially spaced apart from each other in the brush holder. The brushes can be formed of an electrically conductive material such as graphite. Expediently, the brushes can be electrically insulated from each other in the brush holder. In particular, the brush holder can be formed of a dielectric material such as plastic.

The slip ring unit can be non-rotatably mounted i.e. non-rotatably fixed i.e. non-rotatably fastened i.e. non-rotatably secured to the shaft. The slip ring holder of the slip ring unit can be especially formed by a ring externally i.e. on the outside enclosing i.e. surrounding the shaft. The respective slip ring can be formed by a ring externally i.e. on the outside enclosing i.e. surrounding the slip ring holder. The slip rings can be force-fittedly and/or form-fittedly mounted on the slip ring holder. The slip rings can be axially spaced apart from each other in the slip ring holder. The slip rings can be formed from an electrically conductive material such as metal. Expediently, the slip rings can be electrically insulated from each other in the slip ring holder. In particular, the slip ring holder can be formed of a dielectric material such as plastic.

The brush unit and the slip ring unit can be arranged radially opposite each other. The slip rings of the slip ring unit and the brushes of the brush unit can be in electrical contact with each other. The brush holder and the slip ring holder can be radially spaced apart from each other.

The contact device can be arranged axially nearby to the rotor and/or the stator and the sensor unit can be arranged axially facing away from the rotor and/or the stator on the contact device. The contact device can be arranged axially between the sensor unit and the rotor and/or the stator. The brush holder can be arranged axially nearby to the rotor and/or the stator, and the distance sensor can be arranged axially facing away from the rotor and/or the stator on the brush holder of the brush unit. The brush holder can be arranged axially between the distance sensor of the sensor unit and the rotor and/or the stator.

The sensor unit can contain a material piece for generating a measurement signal in the distance sensor. The material piece can be arranged on the slip ring holder of the slip ring unit radially opposite and radially spaced to the distance sensor on the brush holder. The material piece can be non-rotatably mounted i.e. non-rotatably fixed i.e. non-rotatably fastened i.e. non-rotatably secured to the slip ring holder. The distance sensor can have a radial distance equal to 0.1-1.5 mm, preferably equal to 0.5-1.0 mm, from the material piece. The distance between the distance sensor and the slip ring holder can be adapted according to the type of the distance sensor selected. The material piece can be formed of a material compatible with the type of the distance sensor selected. The distance sensor can be a sensor known to skilled person for contactless determination of a distance to a surface. Accordingly, the material piece can be formed of a material known to the skilled person and compatible with the sensor. In particular, the material piece can be formed from a ferromagnetic material.

The slip ring holder of the slip ring unit can be formed from plastic and the material piece of the sensor unit can be surrounded to the outside on all sides by the plastic of the slip ring holder. In this way, the material piece can be protected from environmental influences and a negative influence on the measurement accuracy of the distance sensor can be avoided. For example, the slip ring holder can be injection molded and the material piece can be simultaneously injection molded into the slip ring holder.

The material piece of the sensor unit can be annular and can fixed to the slip ring holder of the slip ring unit so as to surround the axis of rotation. In particular, the material piece can be formed rotationally symmetrically and can be arranged rotationally symmetrically about the axis of rotation i.e. about the shaft. In particular, the material piece can - at least ideally - have an equal distance to the distance sensor at any angle of rotation about the axis of rotation.

In one possible embodiment of the electric machine, slip ring holder of the slip ring unit can contain a circumferential and radially outwardly aligned collar. The collar of the slip ring holder can be arranged radially opposite and radially spaced to the distance sensor of the sensor unit. As a result, the distance to the collar of the slip ring holder can be detected via of the distance sensor. The collar can be flat-shaped on its outer surface facing the distance sensor and surrounding the axis of rotation. The collar of the slip ring holder can be formed rotationally symmetrically and can be arranged rotationally symmetrically about the axis of rotation i.e. about the shaft. In particular, the collar i.e. the outer surface of the collar facing the distance sensor can - at least ideally - have an equal distance to the distance sensor at any angle of rotation about the axis of rotation.

If the sensor unit contains the material piece described above, the material piece can be arranged on the collar of the slip ring holder radially opposite and radially spaced to the distance sensor of the sensor unit. As already described above, the material piece can be non-rotatably mounted i.e. non-rotatably fixed i.e. non-rotatably fastened i.e. non-rotatably secured to the slip ring holder. Especially, the material piece can be molded into the collar of the slip ring holder made of plastic by injection molding of the slip ring holder.

The brush holder can contain a radially outwardly aligned groove with two axially aligned side surfaces and a bottom surface which connects the side surfaces. The distance sensor can be arranged in the groove and can form the bottom surface of the groove at least in regions. The collar of the slip ring holder can then engage radially in the groove. The collar can be arranged at a radial distance to the distance sensor and/or the bottom surface of the groove and at an axial distance to the side surfaces of the groove. The collar can thereby have a radial distance equal to 0.1-1.5 mm, preferably equal to 0.5-1.0 mm, to the distance sensor and/or to the bottom surface of the groove. The collar can thereby be arranged at a distance to axially aligned side surfaces of the groove in the brush holder.

In one possible embodiment of the electric machine, the brush holder of the brush unit can contain a separate element supporting i.e. carrying the distance sensor of the sensor unit and a separate element supporting i.e. carrying the brushes. The two elements can be form-fittedly and/or force-fittedly connected i.e. mounted i.e. fixed i.e. fastened i.e. secured to each other to form the brush holder. Alternatively, the brush holder of the brush unit can be integral and/or of one-piece and can support i.e. carry the distance sensor and the brushes together.

Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, in each case schematically
- Fig. 1: a sectional view of an electric machine according to the invention;
- Fig. 2: a sectional view of the electric machine according to the invention on a contact device and on a sensor unit;
- Fig. 3: a view of the electric machine according to the invention at the contact device and at the sensor unit.

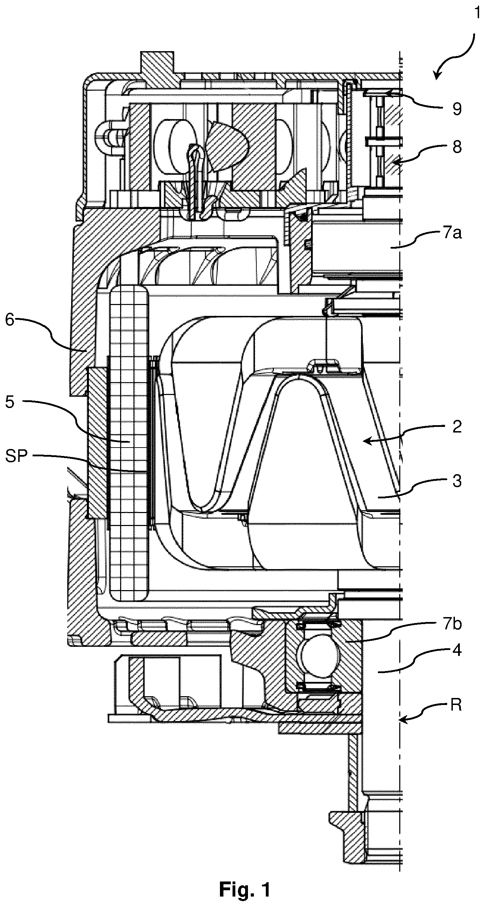

Fig. 1 shows a sectional view of an electric machine 1 according to the invention. The electric machine 1 contains a rotor assembly 2 with a rotor 3 and a shaft 4 which is rotatable about an axis of rotation R. The rotor 3 is non-rotatably fixed to the shaft 4. In addition, the electric machine contains a stator 5 and a housing 6. The stator 5 is non-rotatably fixed to the housing 6 and the rotor assembly 2 is accommodated i.e. arranged in the stator 5.

The shaft 4 and the rotor 3 and the stator 5 and, at least in some areas, the housing 6 are aligned coaxially with each other and with the axis of rotation R of the shaft 4. The rotor 3 is thereby arranged radially spaced to the stator 5, whereby an air gap SP is formed between the rotor 3 and the stator 5. The air gap SP can be between 0.1 mm and 0.5 mm, in particular between 0.2 mm and 0.4 mm.

The shaft 4 and thereby the entire rotor assembly 2 are rotatably mounted in the stator 5 and in the housing 6. For this purpose, the electric machine 1 contains two bearings 7a and 7b, which are arranged on both sides of the rotor 3 and are fixed to the shaft 4. The two bearings 7a and 7b are arranged axially adjacent to the rotor 3.

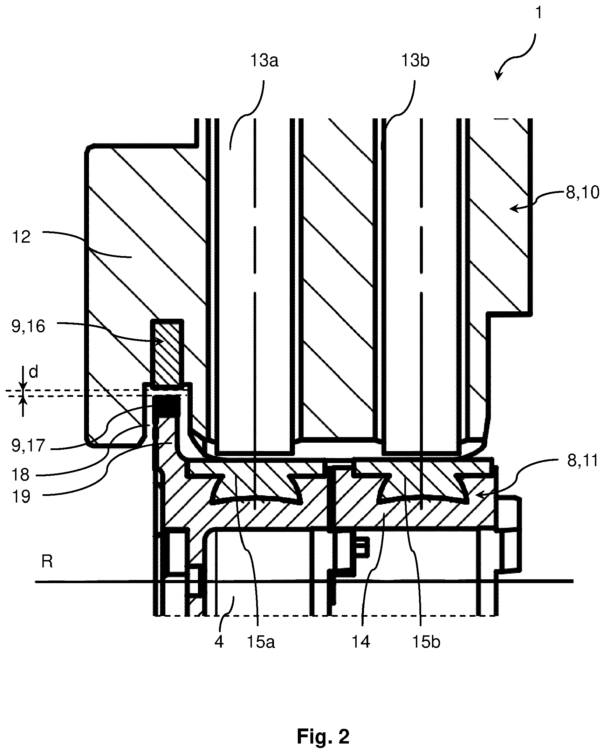

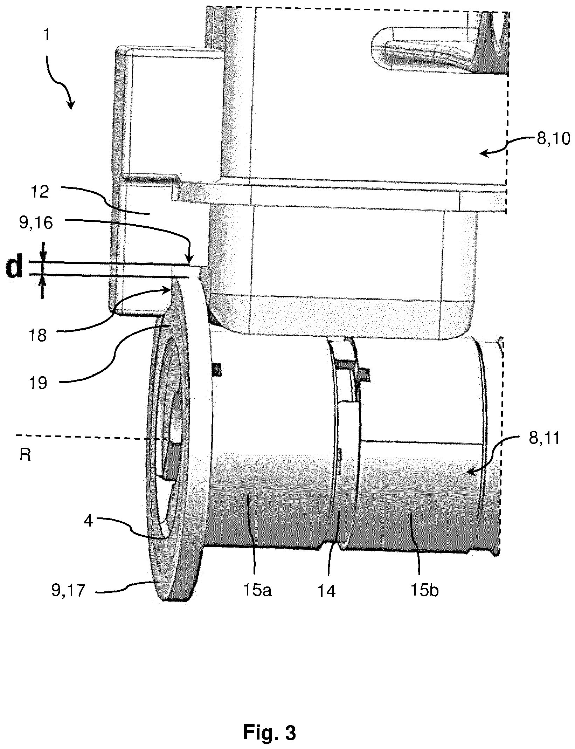

For electrical contacting of the rotor 3 to the outside, the electric machine 1 contains a contact device 8. The contact device 8 is arranged axially adjacent to the bearing 7a, wherein the bearing 7a is arranged between the contact device 8 and the rotor 3. For detecting a change or a deformation of the air gap SP between the rotor 3 and the stator 5, the electric machine 1 also contains a sensor unit 9. The sensor unit 9 is arranged axially adjacent to the contact device 8, wherein the contact device 8 is located between the sensor unit 9 and the bearing 7a. The contact device 8 and the sensor unit 9 are described in more detail below with reference to Fig. 2 and Fig. 3.

Fig. 2 shows a sectional view of the electric machine 1 at the contact device 8 and at the sensor unit 9. Fig. 3 shows a view of the contact device 8 and the sensor unit 9 in the electric machine 1 according to the invention.

The contact device 8 contains a brush unit 10 and a slip ring unit 11. The brush unit 10 is non-rotatably fixed to the housing 6 and/or to the stator 5. The brush unit 10 contains a brush holder 12 and two electrically conductive brushes 13a and 13b. The brushes 3a and 13b are thereby suitably electrically insulated from each other. The slip ring unit 11 is non-rotatably fixed to the shaft 4. The slip ring unit 11 contains a slip ring holder 14 and two electrically conductive slip rings 15a and 15b. The slip ring holder 14 is formed by a ring externally enclosing i.e. surrounding the shaft 4. The two slip rings 15a and 15b are formed by two rings externally enclosing i.e. surrounding the slip ring holder 14. The slip rings 15a and 15b are arranged regionally in the slip ring holder 14 and are form-fittedly and/or force-fittedly connected i.e. fixed to the slip ring holder 14. The slip rings 15a and 15b are electrically insulated from each other and from the shaft 4 by means of the slip ring holder 14. For this purpose, the slip ring holder 14 is made from a dielectric material such as plastic. For electrical contacting of the rotor 3 to the outside, the slip rings 15a and 15b are electrically contacted to a rotor winding which is not shown here. The slip rings 15a and 15b of the slip ring unit 11 are also electrically contacted with the brushes 13a and 13b of the brush unit 10 by a sliding contact.

The sensor unit 9 contains a distance sensor 16 and a material piece 17 made of a material compatible with the distance sensor 16. In particular, the material piece 17 can be ferromagnetic. The distance sensor 16 is thereby arranged i.e. fixed i.e. fastened on the brush holder 12 in a groove 18 of the brush holder 12. Thereby, the distance sensor 16 forms a bottom surface of the groove 18 at least in regions. The material piece 17 is arranged on a radially projecting collar 19 of the slip ring holder 14. In particular, the material piece 17 can be embedded in the collar 19 and can be surrounded on all sides by the material of the collar 19. The collar 19 engages radially in the groove 18. The collar 19 i.e. the material piece 17 is thereby arranged radially opposite and radially spaced to the distance sensor 16 i.e. the bottom surface of the groove 18. In addition, the collar 19 is arranged at a radial distance to the distance sensor 16 i.e. the bottom surface of the groove 18 and at an axial distance to the side surfaces of the groove 18.

Here, the brush holder 12 is formed in one piece. In principle, however, the distance sensor 16 and the brushes 13a and 13b can be attached to separate elements and the separate elements can then be force-fittedly and/or form-fittedly connected to the common brush holder 12.

The distance sensor 16 can detect a distance d to the material piece 17 i.e. to the collar 19 of the slip ring holder 14 i.e. to the slip ring holder 14, and thereby detect the distance d between the slip ring holder 14 and the brush holder 12. The distance d between the slip ring holder 14 and the brush holder 12 correlates with the radial width of the air gap SP between the rotor 3 and the stator 5, so that a change or a deformation of the air gap SP can be indirectly detected by means of the distance sensor 16 via the distance d. The distance sensor 16 can thus be used to detect a change or a deformation of the air gap SP. As a result, a change or a deformation of the air gap SP can be detected at an early stage and damage to the electric machine 1 can be avoided.

## Claims

1. Electric machine (1), in particular an electric motor or an electric generator or an alternator,
- wherein the electric machine (1) contains a rotor assembly (2) with a shaft (4) which is rotatable about an axis of rotation (R) and a rotor (3) which is non-rotatably mounted on the shaft (4) and a stator (5),
- wherein the rotor assembly (2) is rotatably arranged in the stator (5) and the rotor (3) is arranged radially spaced to the stator (5),
- wherein the machine (1) contains a contact device (8) for electrically contacting the rotor (3) to the outside with a stationary brush unit (10) and with a slip ring unit (11) which is non-rotatably mounted on the shaft (4),
- wherein the brush unit (10) contains at least two electrically conductive brushes (13a, 13b) and a brush holder (12) supporting the brushes (13a, 13b), and the slip ring unit (11) contains at least two electrically conductive slip rings (15a, 15b) which are in electrical contact with the brushes (13a, 13b) and a slip ring holder (14) supporting the slip rings (15a, 15b), and
- wherein the machine (1) contains a sensor unit (9) with a distance sensor (16),
**characterized**
**in that** the distance sensor (16) of the sensor unit (9) is arranged on the brush holder (12) of the brush unit (10) radially opposite and radially spaced to the slip ring holder (14) of the slip ring unit (11), so that a radial distance (d) between the brush holder (12) and the slip ring holder (14) can be detected via the distance sensor (16).

2. Electric machine (1) according to claim 1,
**characterized**
- **in that** the contact device (8) is arranged axially nearby to the rotor (3) and/or to the stator (5) and the sensor unit (9) is arranged axially facing away from the rotor (3) and/or from the stator (5) on the contact device (8), and/or
- **in that** the contact device (8) is arranged axially between the sensor unit (9) and the rotor (3) and/or the stator (5).

3. Electric machine (1) according to claim 1 or 2,
**characterized**
- **in that** the brush holder (12) is arranged axially nearby to the rotor (3) and/or to the stator (5) and the distance sensor (16) is arranged axially facing away from the rotor (3) and/or from the stator (5) on the brush holder (12) of the brush unit (10), and/or
- **in that** the brush holder (12) is arranged axially between the distance sensor (16) of the sensor unit (9) and the rotor (3) and/or the stator (5).

4. Electric machine (1) according to any of the preceding claims,
**characterized**
- **in that** the sensor unit (9) contains a material piece (17) for generating a measuring signal in the distance sensor (16), and
- **in that** the material piece (17) is arranged on the slip ring holder (14) of the slip ring unit (11) radially opposite and radially spaced to the distance sensor (16).

5. Electric machine (1) according to claim 4,
**characterized**
**in that** the slip ring holder (14) of the slip ring unit (11) is formed of plastic and the material piece (17) of the sensor unit (9) is surrounded to the outside on all sides by the plastic of the slip ring holder (14).

6. Electric machine (1) according to claim 4 or 5,
**characterized**
**in that** the material piece (17) of the sensor unit (9) is annular and is fixed to the slip ring holder (14) of the slip ring unit (11) so as to surround the axis of rotation (R).

7. Electric machine (1) according to any of the preceding claims,
**characterized**
- **in that** the slip ring holder (14) of the slip ring unit (11) contains a circumferential and radially outwardly aligned collar (19), and
- **in that** the collar (19) of the slip ring holder (14) is arranged radially opposite and radially spaced to the distance sensor (16) of the sensor unit (9).

8. Electric machine (1) according to claim 4 and 7,
**characterized**
**in that** the material piece (17) of the sensor unit (9) is arranged on the collar (19) of the slip ring holder (14) radially opposite and radially spaced to the distance sensor (16) of the sensor unit (9).

9. Electric machine (1) according to claim 7 or 8,
**characterized**
- **in that** the brush holder (12) contains a radially outwardly aligned groove (18) with two axially aligned side surfaces and a bottom surface which connects the side surfaces,
- **in that** the distance sensor (16) is arranged in the groove (18) and forms the bottom surface of the groove (18) at least in regions, and
- **in that** the collar (19) engages radially in the groove (18) and is arranged at a radial distance to the distance sensor (16) and/or the bottom surface of the groove (18) and at an axial distance to the side surfaces of the groove (18).

10. Electric machine (1) according to any of the preceding claims,
**characterized**
- **in that** the brush holder (12) of the brush unit (10) contains a separate element supporting the distance sensor (16) of the sensor unit (9) and a separate element supporting the brushes (13a, 13b), and the two elements are force-fittedly and/or form-fittedly connected to one another to form the brush holder (12), or
- **in that** the brush holder (12) of the brush unit (10) is integral and/or of one-piece and supports the distance sensor (16) and the brushes (13a, 13b).
